# EUROPEAN PATENT SPECIFICATION

(11) **EP 2 746 150 B1**
(45) Date of publication and mention of the grant of the patent: **05.04.2017**
(21) Application number: 12382523.4
(22) Date of filing: 21.12.2012
(51) Int. Cl.: B64C 1/14, B64C 3/34

(54) **Outer fuel tank access cover, wing and aircraft comprising such a cover**
Abdeckung für äußeren Kraftstofftankzugang, Flügel und Flugzeug mit einer solchen Abdeckung
Couvercle d'accès de réservoir de carburant externe, aile et avion comprenant un tel couvercle

(43) Date of publication of application: 25.06.2014
(60) Divisional application: 15156088.5
(73) Proprietor: Airbus Operations S.L., 28906 Madrid (ES)
(72) Inventor: Alazraki, Marcos, E-28906 Getafe-Madrid (ES); Sanz Torrijos, Jose, E-28906 Getafe-Madrid (ES)
(74) Representative: ABG Patentes, S.L.

(56) References cited:
- EP-A1- 2 664 547
- US-A- 4 530 443
- US-A1- 2009 166 473

## Description

### FIELD OF THE INVENTION

The present invention describes an outer fuel access tank cover (FTAC) of an aircraft, a wing comprising such outer FTAC of an aircraft and an aircraft. The invention belongs to the field of designing auxiliary pieces in the wings of aircraft to control the risk of impact against an inner FTAC when an impact occurs against the outer FTAC. This impact can be caused by a tire.

### BACKGROUND OF THE INVENTION

Manholes in an aircraft provide access to the fuel tank. Manholes comprise an inner fuel tank access cover (inner FTAC), an outer FTAC and a void area between the two covers. Fuel Tank Access Covers (FTACs) are mechanically fastened, with fasteners, such as bolts, and clamped against the aircraft wing skin to provide fuel tank access sealing. FTAC are designed to meet a wide array of requirements, some of them are: no fuel leaks, fire resistance, resistance to a tire impact, resistance to impacts resulting from an UERF (Uncontained Engine Rotor Failure), EMH/lightning strike, seal friction, and wing bending. The current design approach to address the resistance of the structure to an impact, for example, a tire impact, is to have heavy and stiff outer FTACs along with large diameter bolts to absorb the impact energy so that it is not transmitted to the inner FTAC and the sealing integrity of the structure is not compromised

The technical problem encountered in current solutions is that FTACs are too heavy. Another problem is that the surrounding mounting structure is damaged which could create major repair issues.

Therefore, there is a need to find a solution for FTACs which
- decreases weight in an aircraft and which
- prevents the impact energy of an impact on the outer FTAC (4) to reach an inner FTAC (3) in an aircraft.
- prevent damage to the manhole mounting structure.

The mentioned prior art approach is seen in the patent US 4 291 816 A wherein a fluid tight closure for an aperture, adapted to form a fuel tank access door for an aircraft, and providing fail-safe features and resistance to lightning strikes is described

Other patent documents describing different solutions in aircrafts approaching absorption of impact energy and or designing FTAC and fuel tank access covers accomplishing the required characteristics taken into account in the state of the art are: EP 1 628 877 B1, US 5,316,167, US 2001/0010345, US 2007/0207421, US 2012/0217347, US 4,291,816 and US 4,530,443 A. The latter discloses an access panel having a composite base and a core spaced between the first face of the base and a second face of the base.

### DESCRIPTION OF THE INVENTION

The present invention provides a solution for the aforementioned problems, by providing an outer FTAC for an aircraft according to claim 1, a wing of an aircraft according to claim 7 and an aircraft according to claim 8. In dependent claims, preferred embodiments of the invention are defined.

The absorption of the impact energy is particularly carried out by plastic deformation of the outer FTAC provided by the invention.

The present invention approaches the technical problems described by providing an outer FTAC that intends to improve its sealing performance after an impact and is lighter with respect to current designs.

Advantageously, this approach reduces the energy transferred to the inner FTAC cover and surrounding wing. The absorption of impact energy is achieved by converting the kinetic energy of the impacting fragment to work energy and heat by means of a plastic deformation of certain parts of the FTAC described.

The advantage of this solution over current designs is that the impact energy is mostly absorbed by the outer FTAC, minimizing the damage to the support structure, which ensures that sealing performance around the outer FTAC is fulfilled.

A second aspect of the invention presents a *wing of an aircraft comprising at least one fuel tank access comprising an outer FTAC according to the first aspect of the invention.*

A last aspect of the invention presents an *aircraft comprising a wing according to the second aspect of the invention.*

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- **Figure 1A**: This figure represents an embodiment of an aircraft wherein the left wing is shown in black.
- **Figure 1B**: This figure shows the locations of the wing of the aircraft shown in figure 1A where the FTACs are located.
- **Figure 1C**: In this figure an embodiment of an outer FTAC according to the state of the art is represented.
- **Figure 1D**: In this figure a sectional view of the inner area of the wing wherein the fuel tank (1) is located is represented. Besides, the relative position of the FTACs to the fuel tank (1) is shown. The different embodiments of the invention are located on the outer FTAC.
- **Figure 1E**: In this figure a zoomed view of figure 1D is represented where the inner FTAC (3) and outer FTAC (4) are joined by means of bolts (18) and the inner FTAC (3) is shown to be sealed to the wing skin (16) with fuel seals (17).
- **Figures 2A, 2B:**: These figures represent two views of an embodiment of the invention where a frangible line (5) is visible on the inner surface (4.1) of an outer FTAC (4). In figure 2B a particular embodiment is shown wherein the FTAC comprises a rip stop feature (8).
- **Figures 3A, 3B, 3C, 3D, 3E, 3F:**: Various frangible line (5, 7) patterns are shown in figures 3A, 3B, 3C, 3D, 3E, 3F.
- **Figure 4**: In this figure an embodiment of an outer FTAC is represented which comprises a foam core (9) between two layers (10, 11) of aluminium.
- **Figure 5**: In this figure a comparative graphic is shown, wherein different levels of energy absorbed per second having different absorption means are represented.

### DETAILED DESCRIPTION OF THE INVENTION

Once the object of the invention has been outlined, specific non-limitative embodiments are described hereinafter.

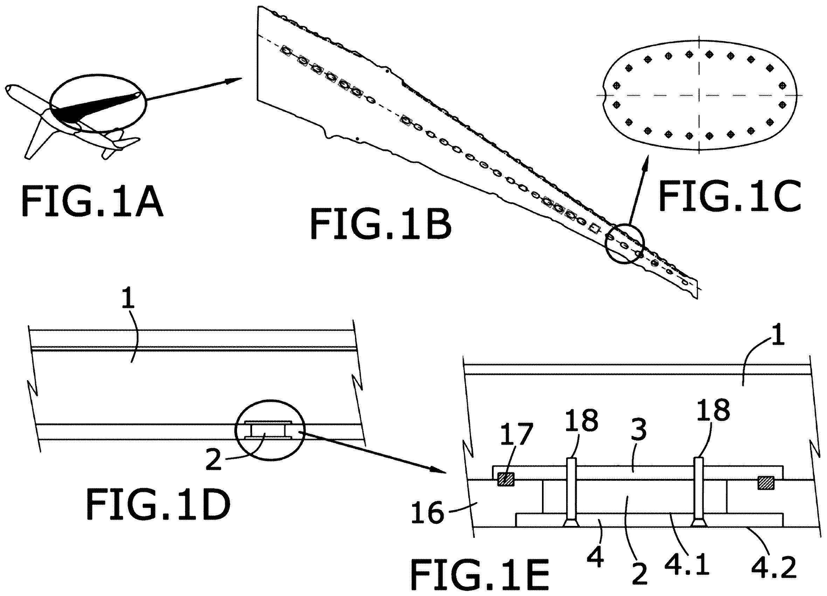

An embodiment of an aircraft is represented in figure 1A and its left wing is shown in figure 1B where the locations where the FTACs (fig. 1C) are located are shown. In figure 1D a sectional view of the inner area of the wing wherein the fuel tank (1) is located is represented. Besides, in figures 1D and 1E the relative position of the FTACs to the fuel tank (1) is shown. The inner FTAC (3) is in the fuel tank (1) and it is sealed with fuel seals (17) to the lower wing skin (16). The outer FTAC (4) is fixed to the lower wing skin (16) by means of a plurality of mounting holes peripherally distributed. The fixing means (18), or fasteners, in an embodiment of the invention, are bolts.

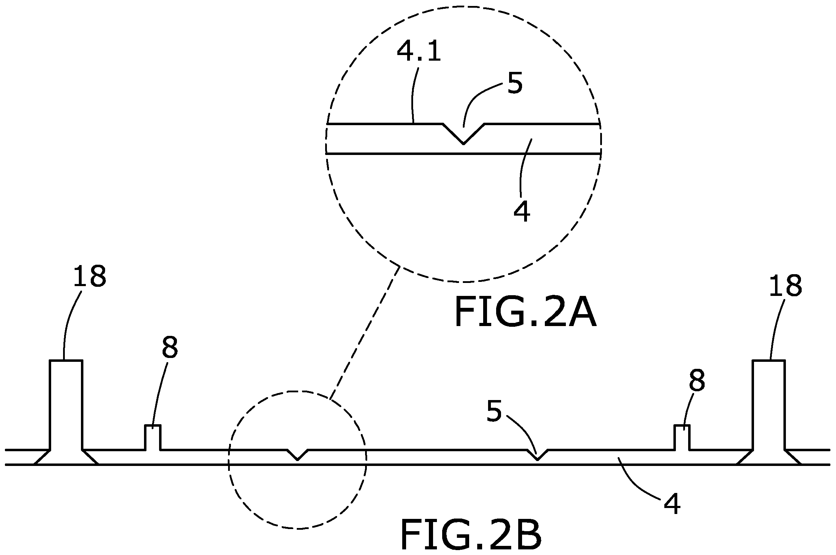

According to the invention, the outer FTAC (4) comprises energy-absorption means which are at least one frangible line (5) located on the inner surface (4.1) of the outer FTAC (4) and calibrated for being ruptured once a predetermined level of energy due to an impact is reached on the inner surface (4.1) of the outer FTAC (4). The frangible line is, in one embodiment of the invention, a v-shaped groove scratched on the inner surface (4.1) of the outer FTAC (4), as it can be seen on figure 2.

In an embodiment of the invention, the outer FTAC (4) is characterized in that the frangible line (5) is zigzag shaped. Advantageously, the zigzag shape changes the load direction abruptly and creates stress risers aiding in the cracking process.

According to the invention, the outer FTAC (4) is characterized in that the frangible line (5) defines a closed region (6) within the inner surface (4.1) of the outer FTAC (4). This frangible line (5) defining a closed region (6) advantageously creates a high stress riser that crack upon an impact event and, once the cracks propagate, the outer FTAC (4) plasticly deforms and therefore absorbs the impact energy.

Another advantage provided by the solution proposed is that deformable or crumble zones are created on the outer FTAC (4) so that it yields and plastically deforms. These deformation zones are created by the frangible line (5) and it is designed to break at certain energy ranges so that the outer FTAC (4) deforms and breaks in a controlled manner. The majority of the energy is absorbed by the outer FTAC (4) and advantageously it maintains sealing integrity of inner sealing of the outer FTAC (4). Advantageously, the solution also reduces the amplitude of the propagation impact wave that is transferred to the inner FTAC (3), so that sealing integrity is fulfilled.

According to the invention, the outer FTAC (4) is characterized in that it comprises at least an extra frangible line (7). The at least an extra frangible line (7) is inside the closed region (6).

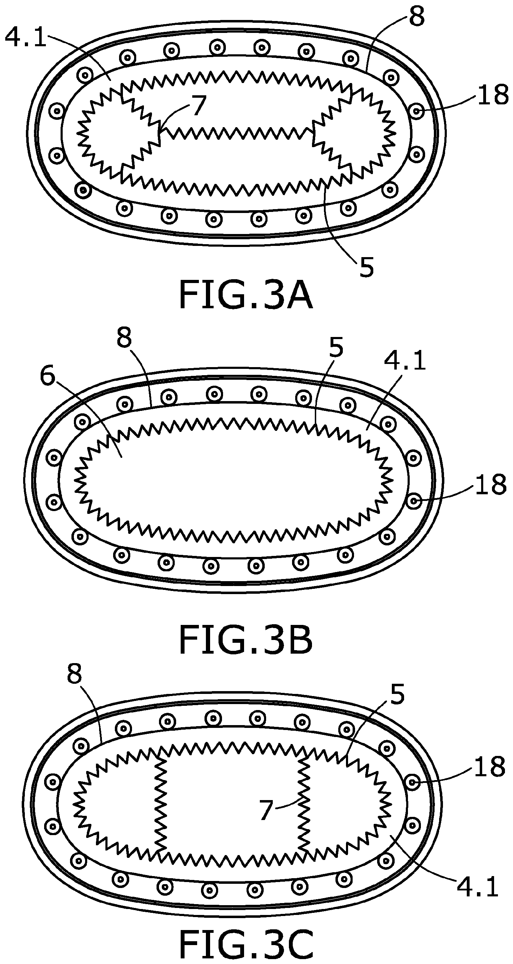

In an embodiment of the invention, the outer FTAC (4) is characterized in that the closed region (6) is ellipse-shaped and zigzagged, and the at least one extra frangible line (7) is zigzagged as it can be seen in figure 3A, 3B, 3C.

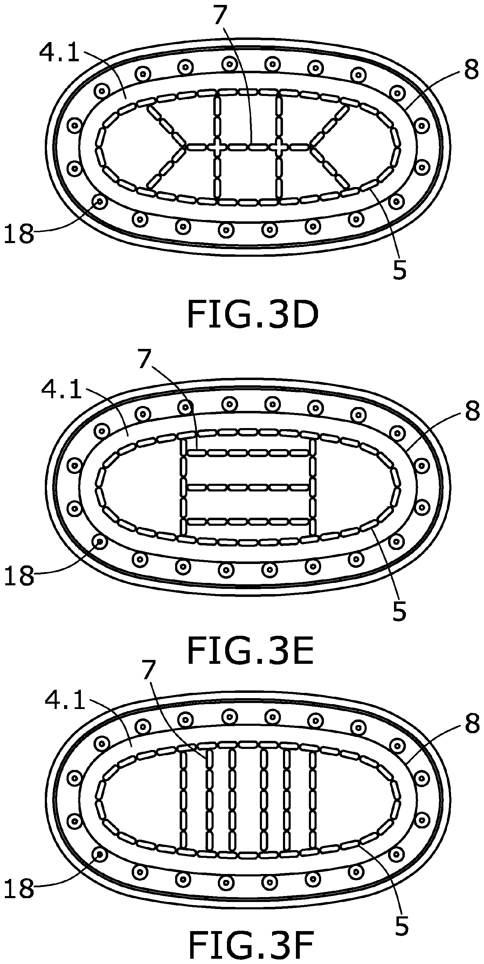

In an embodiment of the invention, the outer FTAC (4) is characterized in that the closed region (6) is ellipse-shaped and stitched, and the at least one extra frangible line (7) is stitched as it can be seen in figure 3D, 3E, 3F.

In the context of the present invention, the stitched feature of the frangible line must be understood as a succession of notches or small weakened areas having less thickness than the one of the outer FTAC (4).

In an embodiment of the invention, the outer FTAC (4) is characterized in that it comprises a stiffener ring means (8) on the inner surface (4.1). Advantageously having a closed region (6) and stiffener ring means (8) makes the crack be contained within the stiffener ring means (8).

In an embodiment of the invention, the outer FTAC (4) is characterized in that the stiffener means (8) are a stiffener ring (8) surrounding all the frangible lines (5, 7) on the inner surface (4.1). The stiffener ring (8) is part of the inner surface (4.1) of the outer FTAC (4) located in the interior perimeter defined by the line of bolts (18). Advantageously, this stiffener ring (8) acts as a rip stop so the cracks do not propagate to the fasteners or bolts. Advantageously, the fuel sealing integrity is maintained since the clamping force between the inner FTAC (3) and the outer FTAC (4) is maintained.

In an embodiment of the invention, the outer FTAC (4) is made of metal.

In an embodiment of the invention, the outer FTAC (4) is made of composite.

In a further embodiment of the invention the outer FTAC (4) comprises absorption means which are at least one layer (10, 11) of a rigid material.

In an embodiment of the invention, the outer FTAC (4) is characterized in that the low density material is foam.

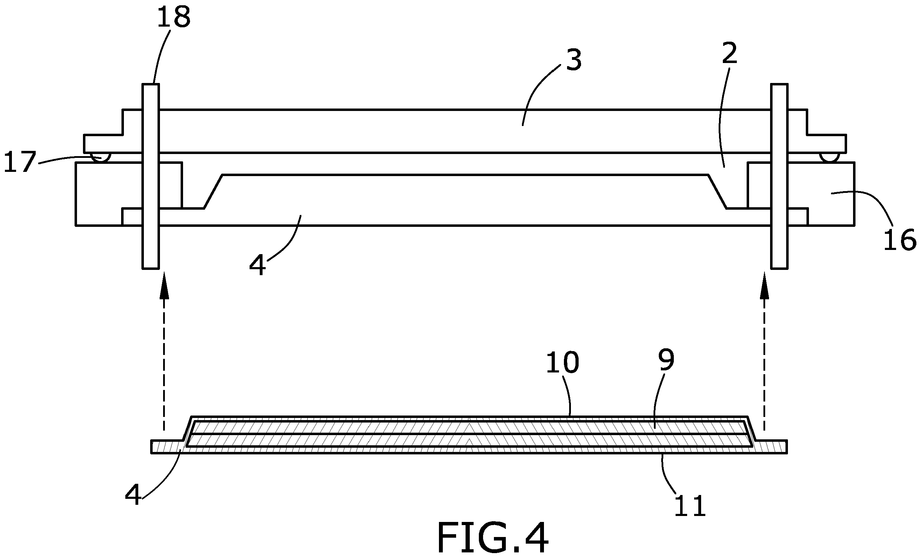

In an embodiment of the invention, the outer FTAC (4) is characterized in that the two layers (10, 11) are aluminium layers, and the piece (9) is made of foam and sandwiched between the two layers (10, 11) of aluminium, as it can be seen in figure 4. In one embodiment the foam is Rohacell^{®}. Advantageously this embodiment yields weight saving opportunities.

In an embodiment of the invention, the outer FTAC (4) is characterized in that the two layers (10, 11) are made of glass fibre reinforced plastic (GFRP).

Advantageously, the solution having the two layers (10, 11) either made of aluminium or GFRP comprises the following advantages:
- no complex manufacturing,
- aerodynamic features, and.
- low weight

The solutions reduce the impact energy transferred to the outer FTAC (4) and surrounding wing skin (16). The reduction of impact energy is achieved by converting the kinetic energy of the impacting fragment, for instance a tire fragment, into work-energy and heat by plastically deforming the outer FTAC (4).

### Exemplary embodiment

A detailed structural analysis and testing have been performed testing the outer FTAC (4) of the invention which received the impact of an aircraft tire fragment. Various frangible lines (5) patterns, some of them shown in figures 3A, 3B, 3C, 3D, 3E, 3F, have been analyzed using structural analysis software to determine the different energy absorption characteristics for each solution.

In figure 4 an outer FTAC (4) is represented comprising a foam piece (9) between two layers (10, 11) of aluminium, the upper or inner layer (10) of aluminium being 2 mm thick and the lower or outermost layer (11) being 1mm thick.

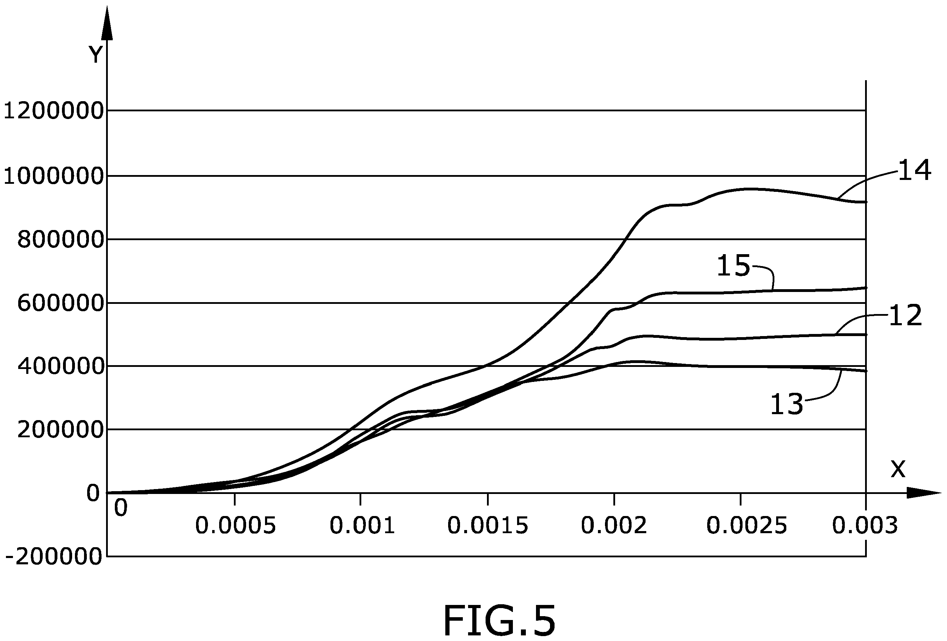

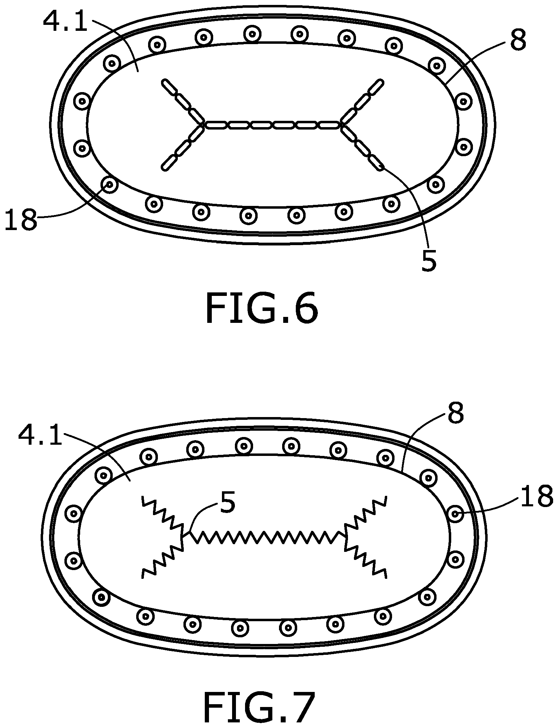

The embodiment of an outer FTAC (4) comprising a foam core (9) between the two layers of aluminium (10, 11) analytically shows the major absorbed impact energy. In figure 5 the absorbed impact energy, in joules (axis Y represents Energy in joules) per second (axis X represents time). The legend of such figure is as follows:
- (12): Absorbed tire impact energy by an outer FTAC comprising a zigzagged frangible line as shown in figure 7.
- (13): Absorbed tire impact energy by an outer FTAC (4) comprising a stitched frangible line (5) as shown in figure 6.
- (14): Absorbed tire impact energy by an outer FTAC (4) comprising a foam piece (9) between two layers (10, 11) of aluminium, as shown in figure 4.
- (15) Absorbed tire impact energy by an outer FTAC (4) comprising a frangible ellipse and zigzagged line (5) and a straight zigzagged frangible line (7), as shown in figure 3A.

The rising conclusions are:
- the zigzag pattern provides better results than the stitched pattern,
- the closed ellipse (5) also provides better results than having a single frangible line (7),
- the best performance is provided by a foam piece (9) between two layers (10, 11) of aluminium, as shown in figure 4.

## Claims

1. Outer fuel tank access cover (FTAC) (4) of an aircraft comprising,
an inner surface (4.1),
an outer surface (4.2),
the outer FTAC adapted for being used to cover the outer opening of a void area (2) of a manhole for accessing the interior of a wing of an aircraft wherein the interior of the wing comprises a fuel tank (1), wherein
the outer FTAC comprises absorption means adapted for absorbing the impact energy due to an object impacting against the outer FTAC (4),
wherein
the absorption means are frangible lines (5, 7) located on the inner surface (4.1) of the outer FTAC (4) and calibrated for being ruptured once a predetermined level of energy due to an impact is reached,
at least one frangible line (5) defines a closed region (6) within the inner surface (4.1) of the outer FTAC (4), and
at least one further frangible line (7) is located inside the closed region (6).

2. Outer FTAC (4) according to claim 1 **characterized in that** the at least one frangible line (5) is zigzag shaped.

3. Outer FTAC (4) according to claims 1 or 2 **characterized in that** the closed region (6) is ellipse-shaped and the at least one further frangible line (7) is zigzaged.

4. Outer FTAC (4) according to any of the preceding claims **characterized in that** it comprises a stiffener means (8).

5. Outer FTAC (4) according to claim 4 **characterized in that** the stiffener means (8) is a stiffener ring (8) surrounding all the frangible lines (5, 7) on the inner surface (4.1) and it is located within *an* interior perimeter defined by *a* line of bolts (18).

6. Outer FTAC (4) according to any of the preceding claims **characterized in that** the outer FTAC (4) is made of metal.

7. Wing of an aircraft comprising at least one fuel tank access comprising an outer FTAC (4) according to any of the preceding claims.

8. Aircraft comprising a wing according to claim 7.

## Patentansprüche

1. Abdeckung für äußeren Treibstofftankzugang (FTAC) (4) eines Luftfahrzeugs, umfassend:
eine Innenfläche (4.1),
eine Außenfläche (4.2),
wobei die äußere FTAC zur Verwendung zum Abdecken der äußeren Öffnung eines Hohlraums (2) eines Mannlochs für Zugang zu dem Inneren eines Flügels eines Luftfahrzeugs ausgelegt ist, wobei das Innere des Flügels einen Treibstofftank (1) umfasst,
wobei die äußere FTAC Absorptionsmittel umfasst, die zum Absorbieren der Aufprallenergie aufgrund eines gegen die äußere FTAC (4) aufprallenden Objekts ausgelegt sind,
wobei
die Absorptionsmittel zerbrechliche Leitungen (5, 7) sind, die sich an der Innenfläche (4.1) der äußeren FTAC (4) befinden und zum Bersten kalibriert sind, sobald ein vorbestimmter Energiepegel aufgrund eines Aufpralls erreicht wird, mindestens eine zerbrechliche Leitung (5) einen geschlossenen Bereich (6) in der Innenfläche (4.1) der äußeren FTAC (4) festlegt und
sich mindestens eine weitere zerbrechliche Leitung (7) in dem geschlossenen Bereich (6) befindet.

2. Äußere FTAC (4) nach Anspruch 1, **dadurch gekennzeichnet, dass** die mindestens eine zerbrechliche Leitung (5) zickzackförmig ist.

3. Äußere FTAC (4) nach Anspruch 1 oder 2, **dadurch gekennzeichnet, dass** der geschlossene Bereich (6) ellipsenförmig ist und die mindestens eine weitere zerbrechliche Leitung (7) zickzackförmig ist.

4. Äußere FTAC (4) nach einem der vorhergehenden Ansprüche, **dadurch gekennzeichnet, dass** sie ein Versteifungsmittel (8) umfasst.

5. Äußere FTAC (4) nach Anspruch 4, **dadurch gekennzeichnet, dass** das Versteifungsmittel (8) ein Versteifungsring (8) ist, der alle zerbrechlichen Leitungen (5, 7) an der Innenfläche (4.1) umgibt und sich in einem durch eine Linie von Bolzen (18) festgelegten Innenumfang befindet.

6. Äußere FTAC (4) nach einem der vorhergehenden Ansprüche, **dadurch gekennzeichnet, dass** die äußere FTAC (4) aus Metall besteht.

7. Flügel eines Luftfahrzeugs, welcher mindestens einen Treibstofftankzugang umfasst, der eine äußere FTAC (4) nach einem der vorhergehenden Ansprüche umfasst.

8. Luftfahrzeug mit einem Flügel nach Anspruch 7.

## Revendications

1. Couvercle d'accès de réservoir de carburant extérieur (FTAC) (4) d'un avion, comprenant:
une surface intérieure (4.1),
une surface extérieure (4.2),
le FTAC extérieur étant adapté pour être utilisé pour recouvrir l'ouverture extérieure d'une zone de vide (2) d'un trou d'homme pour accéder à l'intérieur d'une aile d'un avion, dans lequel l'intérieur de l'aile comprend un réservoir de carburant (1),
dans lequel le FTAC extérieur comprend des moyens d'absorption adaptés pour absorber l'énergie d'impact due à un objet entrant en collision avec le FTAC extérieur (4),
dans lequel les moyens d'absorption sont des lignes cassables (5, 7) situées sur la surface intérieure (4.1) du FTAC extérieur (4) et calibrées pour se rompre une fois qu'un niveau prédéterminé d'énergie due à un impact est atteint,
au moins une ligne cassable (5) définit une région fermée (6) à l'intérieur de la surface intérieure (4.1) du FTAC extérieur (4), et
au moins une ligne cassable supplémentaire (7) est située à l'intérieur de la région fermée (6).

2. FTAC extérieur (4) selon la revendication 1, **caractérisé en ce que** la au moins une ligne cassable (5) est en forme de zigzag.

3. FTAC extérieur (4) selon les revendications 1 ou 2, **caractérisé en ce que** la région fermée (6) est en forme d'ellipse et la au moins une ligne cassable supplémentaire (7) est en zigzag.

4. FTAC extérieur (4) selon l'une quelconque des revendications précédentes, **caractérisé en ce qu'**il comprend des moyens raidisseurs (8).

5. FTAC extérieur (4) selon la revendication 4, **caractérisé en ce que** les moyens raidisseurs (8) sont une couronne de raidissement (8) entourant toutes les lignes cassables (5, 7) sur la surface intérieure (4.1) et elle est située à l'intérieur d'un périmètre intérieur défini par une ligne de boulons (18).

6. FTAC extérieur (4) selon l'une quelconque des revendications précédentes, **caractérisé en ce que** le FTAC extérieur (4) est constitué de métal.

7. Aile d'un avion comprenant au moins un accès de réservoir de carburant comprenant un FTAC extérieur (4) selon l'une quelconque des revendications précédentes.

8. Avion comprenant une aile selon la revendication 7.
